# EUROPÄISCHE PATENTSCHRIFT

(11) **EP 3 517 793 B1**
(45) Veröffentlichungstag und Bekanntmachung des Hinweises auf die Patenterteilung: **28.04.2021**
(21) Anmeldenummer: 19152276.2
(22) Anmeldetag: 17.01.2019
(51) Int. Cl.: F16B 7/04, F16B 21/18

(54) **ROHRVERBINDUNGSVORRICHTUNG**
PIPE COUPLING DEVICE
DISPOSITIF DE RACCORDEMENT DE TUYAUX

(30) Priorität: 30.01.2018 DE 102018101993
(43) Veröffentlichungstag der Anmeldung: 31.07.2019
(73) Patentinhaber: Nickl, Frank, 73079 Süssen (DE)
(72) Erfinder: Nickl, Frank, 73079 Süssen (DE)
(74) Vertreter: Ruckh, Rainer Gerhard

(56) Entgegenhaltungen:
- DE-B4-112004 000 954
- FR-A- 1 386 323
- US-A- 3 332 374
- US-A1- 2007 031 186
- US-A1- 2015 010 371

## Beschreibung

Die Erfindung betrifft eine Anordnung mit einer Rohrverbindungsvorrichtung.

Derartige Rohrverbindungsvorrichtungen dienen zum Verbinden eines Rohres mit einem externen Element, das auch als Rohr gebildet sein kann, in definierter Relativposition zueinander.

Rohrverbindungen, die formschlüssig lösbar oder kraft- oder stoffschlüssig ausgebildet sind, sind in mannigfachen Ausgestaltungsformen bekannt. Prinzipiell können Rohre mit externen Elementen stoffschlüssig, etwa durch Schweißen verbunden sein. Hierzu sind jedoch aufwändige Vorrichtungen notwendig, um die Rohre vor dem Schweißen in definierte Positionen zueinander zu halten um dann miteinander verschweißt werden zu können. Sind die Rohre beispielsweise aus einem armierten Zweikomponenten-Werkstoff, wie etwa aus einem Kunstharz gebildet, so können die Rohre nicht verschweißt werden. Schweißen ist auch in bestimmten Umgebungen, in denen die Rohre als Konstruktionsmittel für Regale oder Sonstiges dienen, nicht immer möglich. Prinzipiell können zu verbindende Rohre auch als Profile derart gebildet sein, dass innerhalb des Profils Profilelemente vorgesehen sind, in denen Aufnahmen, wie Gewindebohrungen vorgesehen sind, sodass die Profile dann miteinander verschraubt werden können. Nachteilig hierbei ist, dass durch die erforderliche Ausstattung der Rohre mit im Innenraum verlaufenden Aufnahmen oder Profilelementen die Herstellung der Profile aufwändiger wird und die Profile ein erhöhtes Gewicht aufweisen.

Prinzipiell sind auch Steckverbindungen bei Rohren bekannt. Diese Stecksysteme weisen jedoch eine hohe Anzahl von Einzelteilen auf und sind dementsprechend aufwändig.

Die FR 1,386,323 A betrifft eine Rohrverbindungsvorrichtung, bei der ein quaderförmiges Verbindungsteil in gegenüberliegende Aussparungen eines ersten Rohres eingeführt wird, so dass die Längsachse des Verbindungsteils quer zur Längsrichtung orientiert ist und eine seitlich am Verbindungsteil ausmündende Gewindebohrung in Längsrichtung des ersten Rohres orientiert ist. In diese Gewindebohrung kann eine Befestigungsschraube eingeführt werden, um ein zweites Rohr am ersten Rohr zu befestigen.

Die US 2015/0010371 A1 betrifft eine Verbindungsvorrichtung zum Verbinden von Profilen. Als Verbindungselement ist ein Bolzen oder Pin vorgesehen, der in seinem Zentrum eine Bohrung aufweist, in welche eine Schraube als weiteres Verbindungselement eingeführt werden kann. Der Bolzen weist eine kreiszylindrische Form auf, wobei diese an seinen längsseitigen Enden einen reduzierten Querschnitt aufweist. Dadurch werden Schultern ausgebildet, die Anlageflächen bilden, an welchen Bohrungen begrenzende Randsegmente der Profile angelegt werden können. Von einer nicht rotationssymmetrischen Ausbildung der Bolzenenden ist in D2 nicht die Rede.

In der DE 11 2004 000 954 B4 ist eine Bauteilverbindungsvorrichtung beschrieben, die bolzenförmige Verbindungsbauteile aufweist, welche in Aussparungen von Bauteilen einsetzbar sind. In jedem Verbindungsbauteil ist eine Gewindebohrung vorgesehen. Mit einer durch die Gewindebohrungen geführte Befestigungsschraube können die Verbindungsbauteile verbunden werden.

Die US 3,332,374 betrifft eine Verbindungsvorrichtung zum Verbinden zweier Bauteile. Hierzu ist ein geschlitztes rohrförmiges Verbindungsstück vorgesehen, das mittels einer Presspassung in gegenüberliegende Aussparungen eines ersten Bauteils einfügbar ist. Das Verbindungsstück weist in einer Mantelfläche eine Bohrung auf. In diese kann ein Verbindungsstift eingefügt werden, um ein zweites Bauteil am ersten Bauteil zu befestigen.

Die US 2007/0031186 A1 betrifft ein Befestigungselement zur Verbindung zweier Körper. Das Befestigungselement ist bolzenförmig ausgebildet und weist einen D-förmigen Querschnitt auf. Am hinteren Ende ist das Befestigungselement verbreitert. Das vordere Ende des Befestigungselements kann in Bohrungen von Körpern eingesteckt werden.

Der Erfindung liegt die Aufgabe zugrunde, eine Anordnung der eingangs genannten Art bereitzustellen, welche bei geringem konstruktivem Aufwand eine hohe Funktionalität hat.

Zur Lösung dieser Aufgabe sind die Merkmale des Anspruchs 1 vorgesehen. Vorteilhafte Ausführungsformen und zweckmäßige Weiterbildungen sind in den abhängigen Ansprüchen beschrieben.

Die Erfindung betrifft eine Anordnung mit einem Rohr, einem externen Element, und einer Rohrverbindungsvorrichtung zur Befestigung des Rohres an dem einem externen Element. Ein Adapterelement ist als Auflager für ein Befestigungselement etwa in der Art einer Schraube vorgesehen, um zwischen dem Rohr und dem externen Element eine formschlüssige Verbindung herzustellen. Hierbei stützen sich gegenüberliegende Enden des Adapterelements jeweils an Anlagen an Wänden des Rohres ab. Zur Ausrichtung des Befestigungselementes zu dem externen Element hin ist vorgesehen, dass zumindest ein Ende des Adapterelementes in Wechselwirkung mit einer Anlage an der Wand des Rohres eine Einrichtung zur Positionierung des Befestigungselements zu dem externen Element bildet. Die Anlagen sind als Aussparungen in den Wänden des Rohres gebildet. Die Anlagen sind als Aussparungen in den Wänden des Rohres gebildet. Das Adapterelement ist als zylindrischer, rechteckiger, quadratischer oder polygonaler Bolzen gebildet, an dessen einem Ende eine Fläche als Teil der Einrichtung zur Positionierung des Befestigungselementes angeordnet ist. Das Adapterelement ist in seiner Winkellage zu dem Rohr und damit auch das mit dem Adapterelement verbundene Befestigungselement dadurch ausgerichtet, dass die Fläche an einer zugeordneten Fläche in der ersten Aussparung des Rohres zur Anlage kommt.

Ein wesentlicher Vorteil der Erfindung besteht darin, dass die Rohrverbindungsvorrichtung aus wenigen Teilen gebildet ist und sich einfach an verschiedene Rohrgeometrien und Winkellagen des externen Elements zu dem Rohr anpassen lässt.

Weiterhin vorteilhaft ist, dass die Rohrverbindung sehr einfach zu montieren ist und sich auch für Nicht-Fachleute eignet.

Mit der Rohrverbindungsvorrichtung der erfindungsgemäßen Anordnung können entweder zwei Rohre miteinander verbunden werden oder ein Rohr mit einem externen Element, wie einer Regalplatte, verbunden werden. Damit kann die Rohrverbindungsvorrichtung flexibel für unterschiedliche Systeme eingesetzt werden, die insbesondere beliebig verzweigte Rohre aufweisen können.

Das Grundprinzip der Rohrverbindungsvorrichtung besteht darin, ein Adapterelement, das geeignet ist, ein Befestigungs- oder Verbindungselement zwischen dem Rohr und dem externen Element an dem Rohr zu befestigen und auszurichten, zu verwenden, um Zugkräfte auf das externe Element an die Rohrwände abzuleiten. Das Adapterelement und das Befestigungselement sind dabei an unterschiedliche Rohrquerschnitte und unterschiedliche Winkellagen des externen Elements zu dem Rohr auf sehr einfache Weise anpassbar. Das Adapterelement weist hierzu eine Einrichtung zum Positionieren des Befestigungselements zu dem externen Element auf und stützt sich mit seinen gegenüberliegenden Enden jeweils an Anlagen oder Anlagepunkten an Wänden des Rohres so ab, dass hohe Querkräfte von dem Adapterelement auf die Wände des Rohres abgeleitet werden können.

Erfindungsgemäß sind die Anlagen an den Rohrwänden als Aussparungen gebildet in die die Enden des Adapterelements eingreifen.

Eine gemäß der Erfindung sehr einfache, aber präzise die Positionierung des Befestigungselements zu dem externen Element garantierende Einrichtung ist aus einem vorzugsweise endseitigen Längenabschnitt des Adapterelements gebildet, der wiederum in Wechselwirkung mit einer Anlage an der Wand des Rohres tritt. Der Längsabschnitt des Adapterelements weist hierbei eine von seiner Querschnitts- oder Ursprungsform abweichende Querschnittsform auf und dieser Längenabschnitt greift wiederum in eine Aussparung an einer Wand des Rohres ein, wobei die Aussparung eine zu der Querschnittsform des Längenabschnittes passenden Gestaltsform aufweist. In Abhängigkeit von der Ausrichtung dieser Gestaltform der Aussparung wird beim Ineinandergreifen des Adapterelements in die Aussparung das Adapterelement in seiner Winkellage zu dem Rohr und damit auch das mit dem Adapterelement verbundene Befestigungselement ausgerichtet. Das Adapterelement ist somit besonders bevorzugt formschlüssig lösbar in der Wandaussparung des Rohres angeordnet.

Um eine einfache Herstellung der Rohrverbindungsvorrichtung zu ermöglichen, ist das Adapterelement stabförmig und besonders bevorzugt als zylindrischer Bolzen aus einem Stahlwerkstoff oder einem NE-Metall gebildet und die Längsachse des Adapterelementes verläuft durch die jeweiligen, sich gegenüberliegenden Aussparungen in den Wänden des Rohres. An einem Ende des zylindrischen Bolzens ist eine Fläche angeordnet, die zusammen mit einer korrespondierenden Fläche in der zugeordneten Aussparung in der Wand des Rohres die Einrichtung zur Positionierung bildet. Hierdurch ist in Abhängigkeit von der Lage der Fläche in der Rohraussparung die Winkellage des Adapterelements zu dem Rohr vorgegeben. Das Adapterelement kann auch eine rechteckige oder quadratische oder sonstige, frei wählbare Querschnittsform aufweisen und in der Art eines Bolzens, an dessen einem Ende eine Fläche als Teil der Einrichtung zur Positionierung des Befestigungselements angeordnet ist, ausgebildet sein. Ein, das Adapterelement vorzugsweise durchragendes oder in einer Gewindebohrung im Adapterelement festgelegtes Befestigungselement ist damit in seiner Winkellage zu dem Rohr und dem externen Element festgelegt.

Das Adapterelement kann zur Montage an dem Rohr durch eine dieser ersten Aussparung mit Fläche gegenüberliegenden Aussparung in der Wand des Rohres geschoben werden und mit seinem, die Fläche aufweisenden Ende, in die zugeordneten Öffnung geschoben werden.

Durch das Adapterelement sind bevorzugt jeweils zwei Querbohrungen als Durchgangsbohrungen oder Gewindebohrungen geführt, durch die jeweils ein Befestigungselement, das als Schraube, vorzugsweise als Maschinenschraube, gebildet ist, hindurchragt oder in den Gewindebohrungen festgelegt ist. Ein Schraubenkopf jeder Schraube stützt sich in einer Einsenkung am Umfang des Adapterelementes ab, sodass die Schraube verdrehgesichert ist. Mit ihrem Schaft greift die Schraube im montierten Zustand jeweils in eine Durchgangsbohrung in dem externen Element ein. Mit Hilfe einer am Schaftende aufgeschraubten Mutter kann dann das externe Element an das Rohr gezogen werden.

Um eine von Querspannungen freie Verbindung zwischen dem Rohr und dem externen Element zu erhalten, sind die Schrauben jeweils senkrecht zu einer Stirnfläche des Rohres, die sie durchragen, ausgerichtet.

Es versteht sich, dass die Montage des Adapterelements in dem Rohr und insbesondere die Montage der Schrauben an dem Adapterelement eines freien Zugangs bedürfen, sodass diese Bauteile vorzugsweise an offenen Schnittflächen des Rohres anzuordnen sind. Die Schnittflächen können in beliebiger Querrichtung zu der Längsachse des Rohres verlaufen. Die genannte Stirnfläche des Rohres ist demnach vorteilhaft eine offene Schnittfläche.

Eine rasche und sehr einfache Montage von Rohren miteinander ist dadurch ermöglicht.

Um eine besonders sichere und gegen Verschieben des externen Elementes an dem Rohr gesicherte Verbindung zu erhalten, kann zusätzlich ein oder können mehrere Formschlusselemente an dem Rohr und/oder an dem externen Element angeordnet sein. Die Formschlusselemente greifen in zugeordnete Aussparungen am jeweils gegenüberliegenden Bauteil (Rohr oder externes Element) ein. Die Formschlusselemente können einstückig mit dem Rohr und/oder dem externen Element gebildet sein.

In einem besonders bevorzugten Ausführungsbeispiel ist das Rohr aus einem Eisen- oder NE-Metall gebildet und weist einen quadratischen oder rechteckförmigen, oder einen in seiner Form frei wählbaren Querschnitt auf. Die Rohre weisen zumindest zwei parallel zueinander verlaufende Wände auf. Die Befestigungselemente sind hierbei bevorzugt als Zylinderschrauben gebildet und als Muttern sind selbstsichernde Muttern gewählt. Hierdurch wird eine auch bei dynamischer Belastung feste Rohrverbindung bewirkt.

Die Erfindung wird im Folgenden anhand der Zeichnungen erläutert. Es zeigen:
- Figur 1: eine schematische, perspektivische Ansicht zweier erfindungsgemäßer Rohrverbindungsvorrichtungen, mit Hilfe derer drei Rohrsegmente zusammengehalten sind,
- Figur 2: eine schematische, perspektivische Ansicht einer erfindungsgemäßen Rohrverbindungsvorrichtung in vergrößerter Darstellung,
- Figur 3: eine perspektivische Darstellung eines Adapterelementes und Befestigungselemente der Rohrverbindungsvorrichtungen, wie in den Figuren 1 und 2 gezeigt, und
- Figur 4: eine perspektivische Darstellung eines weiteren Adapterelementes und Befestigungselemente einer erfindungsgemäßen Rohrverbindungsvorrichtung.
- Figur 5a, 5b: Weiterbildung des Adapterelements gemäß Figur 3 in zwei verschiedenen Ansichten mit einem zugeordneten Spannring
- Figur 6: Einbau des Adapterelements in einem Rohr

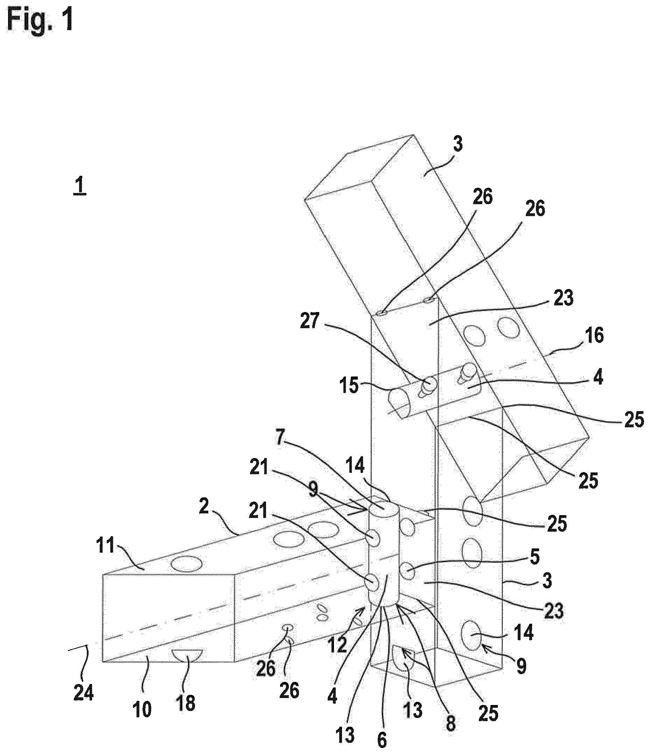

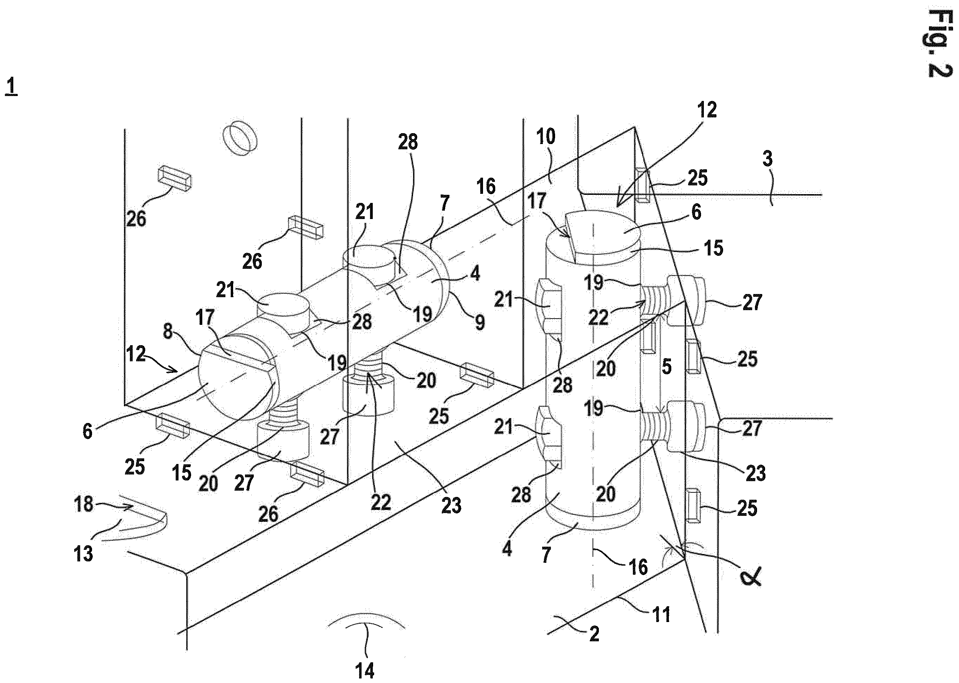

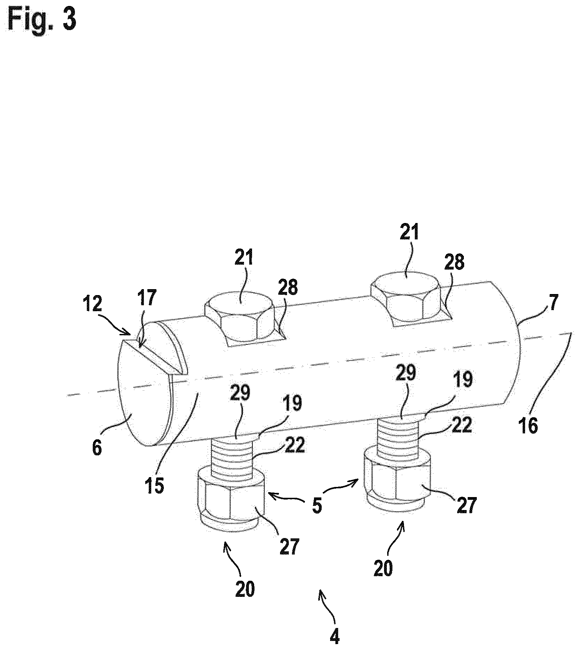

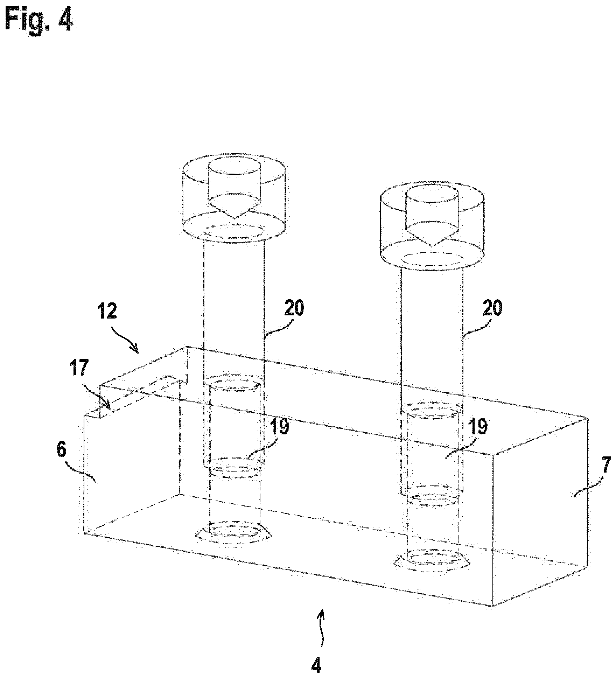

Figur 1 zeigt zwei Rohrverbindungsvorrichtungen 1 zur Verbindung von drei Rohren 2 miteinander. Eine jede Rohrverbindungsvorrichtung 1 dient zum Zusammenfügen eines Rohres 2 mit einem externen Element 3, das in den gezeigten Beispielen ebenfalls ein Rohr ist. Ein Adapterelement 4, das in allen Figuren 1 bis 3 als zylindrischer Bolzen gebildet ist und in Figur 4 als Bolzen mit quadratischem Querschnitt gezeigt ist, dient zur Ausrichtung zweier Befestigungselemente 5 und zur Verbindung der Befestigungselemente 5 mit dem Rohr 2. Die Befestigungselemente 5 sind als Maschinenschrauben 20 gebildet. Wie insbesondere die Figur 3 verdeutlicht, sind die beiden Enden 6, 7 des Adapterelementes 4 unterschiedlich gebildet. Das Ende 7 ist mit gleichem Querschnitt (Ursprungsform) gebildet, wie der überwiegende Teil des Adapterelements 4, während das Ende 6 über einen geringen Längenabschnitt 15, verglichen mit der Gesamtlänge des Adapterelements 4, eine von der Kreisform oder der sonstigen Ursprungsform abweichende Querschnittsform aufweist. Im gezeigten Beispiel ist hierzu eine Fläche 17 an dem Umfang des Adapterelements 4 vorgesehen. Wie Figur 2 am besten verdeutlicht, greift im montierten Zustand der Rohrverbindungsvorrichtung 1 der Längenabschnitt 15 mit der Fläche 17 in eine Aussparung 13 einer Wand 10 des Rohres 2 ein . Diese als Anlage 8 für das Ende 6 des Adapterelements 4 dienende Aussparung 13 weist eine zu der Fläche 17 passgenaue Fläche 18 auf. Die Ausrichtung der Fläche 18 in dem Rohr 2 bestimmt somit die Ausrichtung des Adapterelements 4 und der damit verbundenen Befestigungselemente 5.

Um das Adapterelement 4 wie gezeigt zu montieren, weist eine der Wand 10 gegenüberliegende Wand 11 eine weitere Aussparung 14 auf, die als kreisrunde Öffnung gebildet ist. Durch die Aussparung 14 wird das Adapterelement 4 geschoben und gelangt mit seinem Ende 6 in die Aussparung 13 und kommt mit seinem anderen Ende 7 in der Aussparung 14 zu liegen. Die Aussparung 14 bildet somit eine zweite Anlage 9 für das Adapterelement 4, wodurch Querkräfte in dem Adapterelement 4 auf das Rohr 2 abgeleitet werden können. Die Flächen 17 und 18 bilden zusammen mit dem Adapterelement 4 im Wesentlichen eine Einrichtung 12 zur Positionierung der Befestigungselemente 5. In den gezeigten Ausführungsbeispielen verläuft eine Längsachse 16 des Adapterelements 4 senkrecht zu einer Längsachse 24 des Rohres 2.

Die Adapterelemente 4 weisen je zwei Querbohrungen 19 als Durchgangsbohrungen für die Schrauben 20 auf. Jeder Schraubenkopf 21 der Schrauben 20 kommt dabei in einer jeweiligen Einsenkung 28 am Umfang des Adapterelementes 4 zu liegen und ist verdrehgesichert für die anschließende Montage mit dem externen Element 3 mit Hilfe einer aufzuschraubenden Mutter 27. Die Schraubenschäfte 22 ragen jeweils senkrecht durch eine Stirnfläche 23, die auch als offene Schnittfläche des Rohres 2 gebildet sein kann, hindurch und durchragen Öffnungen an dem externen Element 3. Die Muttern 27 ziehen das externe Element 3 gegen das Rohr 2. Zur Vormontage der Schrauben 20 an dem Adapterelement 4 können O-Ringe 29 über die Schraubenschäfte 22 gestülpt sein, um die Schrauben an den jeweiligen Adapterelementen 4 zu halten. Wie Figur 4 in einem weiteren Ausführungsbeispiel eines Adapterelements 4 zeigt, kann der Querschnitt oder die Ursprungsform des Adapterelements 4 auch quadratisch sein. Für gleiche Bauteile gelten dieselben Bezugszeichen, wie in den vorangehenden Figuren. Die Schrauben 20 sind in dem in Figur 4 gezeigten Ausführungsbeispiel in Gewindebohrungen des Adapterelements 4 eingeschraubt. Die Schrauben 20 sind hier mit einem Zylinderkopf mit Innensechskant ausgebildet.

Zur dauerhaften, exakten Positionierung des Rohres 2 an dem externen Element 3 sind Formschlusselemente 25 an den Wänden 10, 11 in Form von quaderförmigen Erhebungen vorgesehen, die einstückig aus dem jeweiligen Wandmaterial des Rohres 2 gebildet sind. Sie gelangen in passgenaue Aussparungen 26 an dem jeweiligen externen Element 3 und verhindern so ein Verrutschen der Bauteile gegeneinander. Es ergibt sich ein sehr stabiler dauerhafter Verbund der Rohre 2 und externen Elemente 3 miteinander. Die Rohrverbindungsvorrichtung 1 ist auch von Nicht-Fachleuten, etwa von Endnutzern von modular aufgebauten Regalsystemen anwendbar.

Der Winkel α den die Stirnfläche 23 zu der Längsachse 24 des Rohres 2 einnehmen kann, kann aufgrund des gesamten Aufbaues der Rohrverbindungsvorrichtung 1 von 90° bis zu einem sehr spitzen Winkel von beispielsweise 20° gewählt werden.

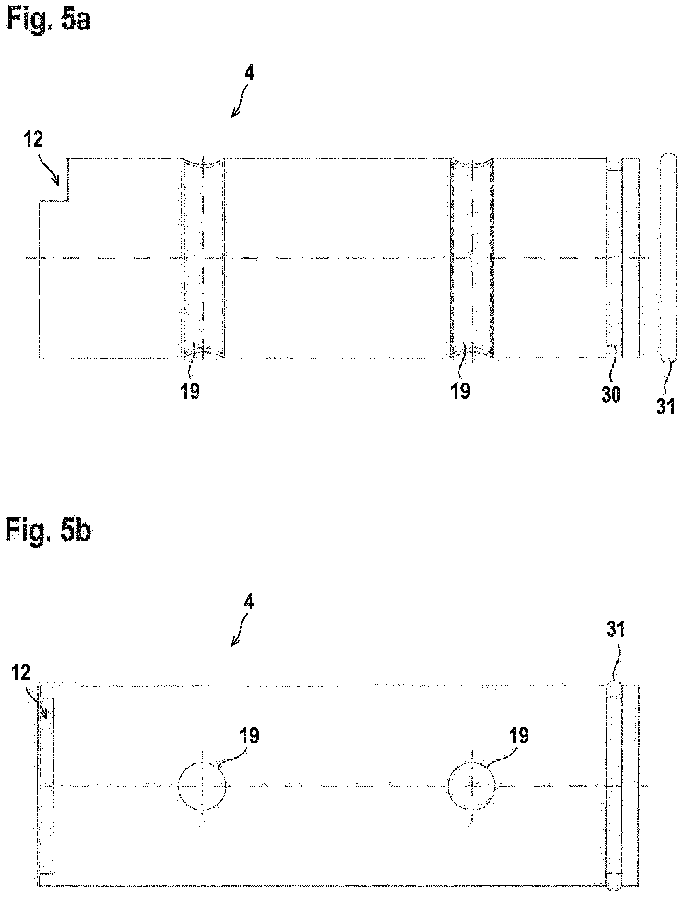

Die Figuren 5a und 5b zeigen eine Weiterbildung der Adapterelemente 4 gemäß Figur 3. Das Adapterelement 4 gemäß den Figuren 5a, 5b weist in Übereinstimmung mit der Ausführungsform gemäß Figur 3 einen kreiszylindrischen Grundkörper auf, in welchen zwei Querbohrungen 19 eingearbeitet sind.

In weiterer Übereinstimmung mit der Ausführungsform gemäß Figur 3 weist das Adapterelement 4 eine Einrichtung zur Positionierung 12 in Form eines Absatzes an einem längsseitigen Ende des Grundkörpers auf.

In Erweiterung zur Ausführungsform gemäß Figur 3 ist im Bereich des zweiten längsseitigen Endes des Grundkörpers des Adapterelements 4 ein Einstich 30 eingearbeitet. Der Einstich 30 bildet eine in Umfangrichtung des Grundkörpers umlaufende Nut mit einem über deren Länge konstanten Querschnitt.

In diesen Einstich 30 kann ein Sprengring 31 eingesetzt werden. Figur 5a zeigt den Sprengring 31 abgelöst vom Einstich 30. Figur 5b zeigt den Sprengring 31 in dem Einstich 30.

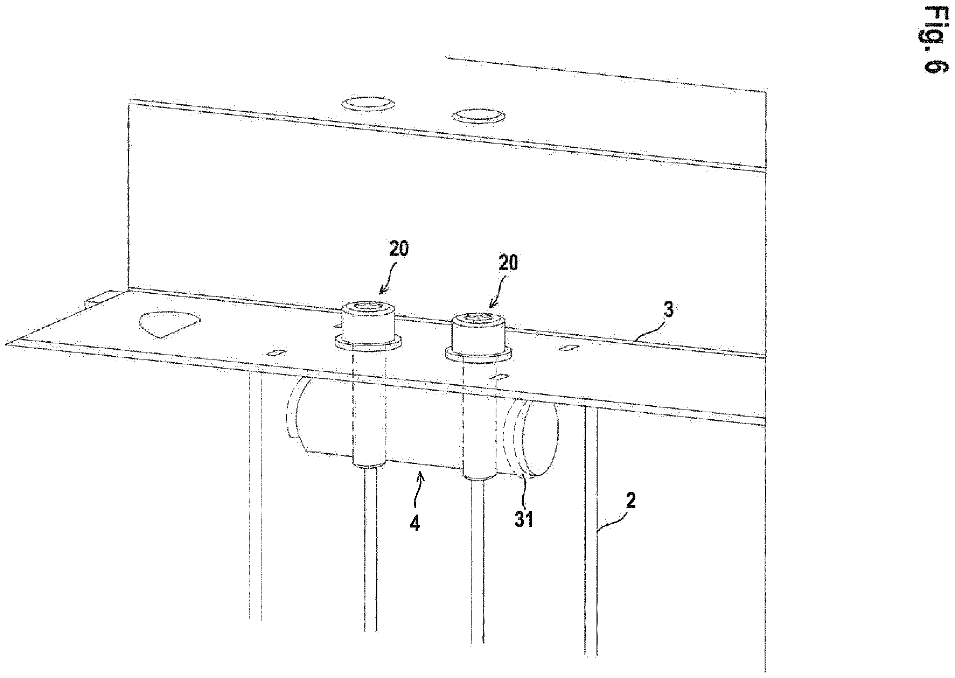

Mit dem Sprengring 31 wird ein verbesserter Halt des Adapterelements 4 in einem Rohr 2 erzielt. Dies ist in Figur 6 veranschaulicht. Dort wird das Adapterelement 4 wieder zur Verbindung eines Rohrs 2 mit einem externen Element 3 eingesetzt.

Das Adapterelement 4 wird derart im Rohr 2 montiert, dass zunächst die Einrichtung zur Positionierung 12 in eine korrespondierende Bohrung in einer Wand des Rohrs 2 eingeschoben wird, bis der Sprengring 31 im Adapterelement 4 an der Außenseite der gegenüberliegenden Rohrwand anliegt. Dann wird der Sprengring 31 zusammengedrückt und durch die angrenzende Bohrung in der Rohrwand gedrückt. Nach Passieren der Bohrung entspannt sich der Sprengring 31 und bewirkt eine zuverlässige Lagesicherung des Adapterelements 4. Dann erfolgt mit den Befestigungselementen 5 in Form der Schrauben 20 die Fixierung des Elements 3 am Rohr 2.

Nickl, Frank

73079 Süßen, DE

### Bezugszeichenliste

- (1): Rohrverbindungsvorrichtung
- (2): Rohr
- (3): Element, extern
- (4): Adapterelement
- (5): Befestigungselement
- (6): Ende, v. 4
- (7): Ende, v. 4
- (8): Anlage, für 6
- (9): Anlage, für 7
- (10): Wand, v. 2
- (11): Wand, v. 2
- (12): Einrichtung zur Positionierung
- (13): Aussparung
- (14): Aussparung
- (15): Längenabschnitt, v. 4
- (16): Längsachse, v. 4
- (17): Fläche, an 4
- (18): Fläche, an 13
- (19): Querbohrung
- (20): Schraube
- (21): Schraubenkopf
- (22): Schaft
- (23): Stirnfläche
- (24): Längsachse, v. 2
- (25): Formschlusselement, an 10, 11
- (26): Aussparung, an 3
- (27): Mutter, v. 5
- (28): Einsenkung
- (29): O-Ring
- (30): Einstich
- (31): Sprengring
- α: Winkel

## Patentansprüche

1. Anordnung mit einem Rohr (2), einem externen Element (3), und einer Rohrverbindungsvorrichtung zur Befestigung des Rohres (2) an dem externen Element (3), mit zumindest einem Adapterelement (4) und zumindest einem Befestigungselement (5), wobei das Adapterelement (4) als Auflager an dem Rohr (2) für das zumindest eine Befestigungselement (5) zur Befestigung des Rohres (2) an dem externen Element (3) dient, wobei sich gegenüberliegende Enden (6, 7) des Adapterelements (4) jeweils in Anlagen (8, 9) an Wänden (10, 11) des Rohres (2) abstützen und wobei zumindest ein Ende (6) des Adapterelementes (4) eine Einrichtung zur Positionierung (12) des Befestigungselementes (5) zu dem externen Element (3) in Wechselwirkung mit einer Anlage (8, 9) bildet. **dadurch gekennzeichnet, dass** die Anlagen (8, 9) als Aussparungen (13, 14) in den Wänden (10, 11) des Rohres (2) gebildet sind, dass ein Teil der Einrichtung (12) aus einem Längenabschnitt (15) des Adapterelementes (4) mit von seiner Querschnitts-Ursprungsform abweichendem Querschnitt gebildet ist und dass der Längenabschnitt (15) in eine Aussparung (13) einer Wand (10) des Rohres (2) mit passender, von der Ursprungsform abweichender Querschnittsform eingreift, dass das Adapterelement (4) als zylindrischer, rechteckiger, quadratischer oder polygonaler Bolzen gebildet ist, an dessen einem Ende (6) eine Fläche (17) als Teil der Einrichtung zur Positionierung (12) des Befestigungselementes (5) angeordnet ist, und dass das Adapterelement in seiner Winkellage zu dem Rohr und damit auch das mit dem Adapterelement verbundene Befestigungselement dadurch ausgerichtet ist, dass die Fläche (17) an einer zugeordneten Fläche (18) in der ersten Aussparung (13) des Rohres (2) zur Anlage kommt.

2. Anordnung nach Anspruch 1, **dadurch gekennzeichnet, dass** das Adapterelement (4) formschlüssig lösbar in der Aussparung (13) mit von der Ursprungsform abweichendem Querschnitt in der Wand (10) gehalten ist.

3. Anordnung nach Anspruch 1 oder 2, **dadurch gekennzeichnet, dass** in das Adapterelement (4) ein Einstich (30) zur Aufnahme eines Sprengrings (31) eingearbeitet ist.

4. Anordnung nach einem der Ansprüche 1 bis 3, **dadurch gekennzeichnet, dass** das Adapterelement (4) stabförmig gebildet ist und eine Längsachse (16) des Adapterelements (4) durch die als Öffnungen in den Wänden (10, 11) des Rohres (2) gebildeten ersten und zweiten Aussparungen (13, 14) verläuft, und dass das Adapterelement (4) zu dessen Montage in dem Rohr (2) durch die, der ersten Aussparung (13) gegenüberliegenden zweiten Aussparung (14) in der Wand (11) des Rohres (2) geschoben ist und mit seinem jeweiligen Ende (6, 7) in einer jeweiligen Aussparung (13, 14) gehalten ist.

5. Anordnung nach einem der Ansprüche 2 bis 4, **dadurch gekennzeichnet, dass** das Adapterelement (4) zumindest eine Querbohrung (19) zur Aufnahme des Befestigungselements (5) aufweist.

6. Anordnung nach einem der Ansprüche 1 bis 5, **dadurch gekennzeichnet. dass** das Befestigungselement (5) als Schraube (20) gebildet ist, deren Schraubenkopf (21) sich an dem Adapterelement (4) abstützt und die mit ihrem Schaft (22) in das externe Element (3) eingreift und es gegen das Rohr (2) zieht, oder deren Schraubenkopf (21) sich an einer Wand (10) des Rohres (2) abstützt und die mit ihrem Schaft (22) in das Adapterelement (4) eingreift und es gegen das Rohr (2) zieht.

7. Anordnung nach einem der Ansprüche 1 bis 6, **dadurch gekennzeichnet, dass** durch die Einrichtung zur Positionierung (12) das Befestigungselement (5) etwa senkrecht zu einer Stirnfläche (23) des Rohres (2) ausgerichtet ist.

8. Anordnung nach Anspruch 7, **dadurch gekennzeichnet, dass** die Stirnfläche (23) eine offene Schnittfläche in Querrichtung des Rohres (2) ist, die einen vorgebbaren Winkel (a) zu der Längsachse (24) des Rohres (2) einnimmt.

9. Anordnung nach einem der Ansprüche 1 bis 8, **dadurch gekennzeichnet, dass** an zumindest einer Wand (10, 11) des Rohres (2) ein Formschlusselement (25) angeordnet ist, dass in eine Aussparung (26) an dem externen Element (3) eingreift.

10. Anordnung nach einem der Ansprüche 1 bis 9, **dadurch gekennzeichnet, dass** das Rohr (2) aus einem Eisen- oder NE-Werkstoff gebildet ist und eine quadratische, rechteckige, runde, ovale oder in der Form frei wählbare Querschnittsform aufweist, die zumindest zwei parallel verlaufende Wände (10, 11) zur Anbringung der Aussparungen (13, 14) aufweist.

11. Anordnung nach einem der Ansprüche 1 bis 10, **dadurch gekennzeichnet, dass** mehrere Befestigungselemente (5) vorgesehen sind, die als Zylinderschrauben mit Sechskantkopf und mit selbstsichernden Muttern (27) gebildet sind und durch die das Rohr (2) und das externe Element (3) gegeneinander gezogen und formschlüssig lösbar miteinander verbunden sind.

12. Anordnung nach einem der Ansprüche 1 bis 11, **dadurch gekennzeichnet, dass** mehrere Befestigungselemente (5) vorgesehen sind, die als Zylinderschrauben gebildet sind und durch die das Rohr (2) und das externe Element (3) mit Hilfe der sich im Adapterelement befindlichen Gewindebohrungen gegeneinander gezogen und formschlüssig lösbar miteinander verbunden sind.

## Claims

1. Arrangement with a pipe (2), an external element (3) and a pipe connecting device for securing the tube (2) to the external element (3), with at least one adapter element (4) and at least one securing element (5), wherein the adapter element (4) serves as support at the pipe (2) for the at least one securing element (5) for securing the pipe (2) to the external element (3), wherein mutually opposite ends (6, 7) of the adapter element (4) are respectively supported in supports (8, 9) at walls (10, 11) of the pipe (2) and wherein at least one end (6) of the adapter element (4) forms a device (12) for positioning the securing element (5) with respect to the external element (3) in interaction with a support (8, 9), **characterised in that** the supports (8, 9) are formed as cut-outs (13, 14) in the walls (10, 11) of the pipe (2), that a part of the device (12) is formed from a length section (15) of the adapter element (4) with a cross-section departing from its original cross-sectional shape and that the length section (15) engages in a cut-out (13) of a wall (10) of the pipe (2) by a fitting cross-sectional shape differing from the original shape, that the adapter element (4) is formed as a cylindrical, rectangular, square or polygonal pin, at one end (6) of which a surface (17) as part of the device (12) for positioning the securing element (5) is arranged, and that the adapter element is oriented in its angular position with respect to the pipe and thus also the securing element connected with the adapter element in such a way that the surface (17) comes into contact with an associated surface (18) in the first cut-out (13) of the pipe (2).

2. Arrangement according to claim 1, **characterised in that** the adapter element (4) is mechanically positively detachably retained in the cut-out (13) by the cross-section, which differs from the original shape, in the wall (10).

3. Arrangement according to claim 1 or 2, **characterised in that** an incision (30) for reception of a spring ring (31) is formed in the adapter element (4).

4. Arrangement according to any one of claims 1 to 3, **characterised in that** the adapter element (4) is of rod-shape configuration and a longitudinal axis (16) of the adapter element (4) runs through the first and second cut-outs (13, 14), which are formed as openings in the walls (10, 11) of the pipe (2), and that the adapter element (4) for mounting thereof in the pipe (2) is pushed through the second cut-out (14), which is opposite the first cut-out (13), in the wall (11) of the pipe (2) and is held by its respective end (6, 7) in a respective cut-out (13, 14).

5. Arrangement according to any one of claims 2 to 4, **characterised in that** the adapter element (4) has at least one transverse bore (19) for reception of the securing element (5).

6. Arrangement according to any one of claims 1 to 5, **characterised in that** the securing element (5) is formed as a screw (20), the screw head (21) of which is supported at the adapter element (4) and which engages by its shank (22) in the external element (3) and draws it against the pipe (2), or the screw head (21) of which is supported at a wall (10) of the pipe (2) and engages by its shank (22) in the adapter element (4) and draws it against the pipe (2).

7. Arrangement according to any one of claims 1 to 6, **characterised in that** the securing element (5) is oriented approximately perpendicularly to an end surface (23) of the pipe (2) by the device (12) for positioning.

8. Arrangement according to claim 7, **characterised in that** the end surface (23) is an open sectional surface in the transverse direction of the pipe (2), which adopts a predeterminable angle (α) with respect to the longitudinal axis (24) of the pipe (2).

9. Arrangement according to any one of claims 1 to 8, **characterised in that** a mechanically positive coupling element (25) is arranged at at least one wall (10, 11) of the pipe (2) and engages in a cut-out (26) at the external element (3).

10. Arrangement according to any one of claims 1 to 9, **characterised in that** the pipe (2) is formed from an iron or NE material and has a square, rectangular, round or oval cross-sectional shape or a cross-sectional shape freely selectable in form, which has at least two parallelly extending walls (10, 11) for application of the cut-outs (13, 14).

11. Arrangement according to any one of claims 1 to 10, **characterised in that** several securing elements (5) are provided, which are formed as cylinder screws with hexagonal head and with self-locking nuts (27) and by which the pipe (2) and the external element (3) are drawn towards one another mechanically positively and detachably connected together.

12. Arrangement according to any one of claims 1 to 11, **characterised in that** several securing elements (5) are provided, which are formed as cylinder screws and by which the pipe (2) and the external element (3) are drawn towards one another with the help of threaded bores present in the adapter element and are mechanically positively and detachably connected together.

## Revendications

1. Ensemble comprenant une tubulure (2); un élément extérieur (3); un dispositif de raccordement tubulaire conçu pour fixer ladite tubulure (2) audit élément extérieur (3) ; au moins un élément adaptateur (4) ; et au moins un élément de fixation (5), ledit élément adaptateur (4) remplissant la fonction d'un support situé sur la tubulure (2) et dédié audit élément de fixation (5) à présence minimale, conçu pour fixer ladite tubulure (2) à l'élément extérieur (3), sachant que des extrémités opposées (6, 7) dudit élément adaptateur (4) prennent respectivement appui sur des parois (10, 11) de ladite tubulure (2) dans des zones d'adossement (8, 9), et sachant qu'au moins une extrémité (6) dudit élément adaptateur (4) forme un système (12) de positionnement de l'élément de fixation (5) par rapport à l'élément extérieur (3), en interaction avec une zone d'adossement (8, 9), **caractérisé par le fait que** les zones d'adossement (8, 9) se présentent comme des évidements (13, 14) pratiqués dans les parois (10, 11) de la tubulure (2) ; **par le fait qu'**une partie du système (12) est formée par une région longitudinale (15) de l'élément adaptateur (4) dotée d'une section transversale différant de sa configuration de section transversale originelle; **par le fait que** ladite région longitudinale (15) pénètre dans un évidement (13), pratiqué dans une paroi (10) de la tubulure (2), avec configuration de section transversale adéquate différant de ladite configuration originelle ; **par le fait que** l'élément adaptateur (4) revêt la forme d'un tenon cylindrique, rectangulaire, carré ou polygonal, à l'une (6) des extrémités duquel se trouve une surface (17) matérialisant une partie du système (12) de positionnement de l'élément de fixation (5) ; et **par le fait que** l'alignement de l'élément adaptateur dans la position angulaire qu'il occupe par rapport à la tubulure, et donc également de l'élément de fixation relié audit élément adaptateur, est instauré par venue en applique de ladite surface (17) contre une surface associée (18), dans le premier évidement (13) de ladite tubulure (2).

2. Ensemble selon la revendication 1,
**caractérisé par le fait**
**que** l'élément adaptateur (4) est retenu amoviblement par complémentarité de formes, dans l'évidement (13) pratiqué dans la paroi (10), avec section transversale différant de la configuration originelle.

3. Ensemble selon la revendication 1 ou 2,
**caractérisé par le fait**
**qu'**une saignée (30) est pratiquée dans l'élément adaptateur (4), en vue de recevoir une bague élastique (31).

4. Ensemble selon l'une des revendications 1 à 3,
**caractérisé par le fait**
**que** l'élément adaptateur (4) revêt la forme d'un barreau, et un axe longitudinal (16) dudit élément adaptateur (4) passe par les premier et second évidements (13, 14) se présentant comme des orifices pratiqués dans les parois (10, 11) de la tubulure (2) ; et par le fait que, pour assurer le montage dudit élément adaptateur (4) dans la tubulure (2), ce dernier est engagé à travers le second évidement (14) pratiqué dans la paroi (11) de ladite tubulure (2), tourné à l'opposé du premier évidement (13), et est retenu dans un évidement considéré (13, 14) par son extrémité respective (6, 7).

5. Ensemble selon l'une des revendications 2 à 4,
**caractérisé par le fait**
**que** l'élément adaptateur (4) est percé d'au moins un alésage transversal (19) conçu pour recevoir l'élément de fixation (5).

6. Ensemble selon l'une des revendications 1 à 5,
**caractérisé par le fait**
**que** l'élément de fixation (5) est constitué d'une vis (20) dont la tête (21) est en appui sur l'élément adaptateur (4) et qui pénètre, par sa tige (22), dans l'élément extérieur (3) en tirant celui-ci contre la tubulure (2) ; ou dont la tête (21) est en appui sur une paroi (10) de ladite tubulure (2) et qui pénètre, par sa tige (22), dans ledit élément adaptateur (4) en tirant ce dernier contre ladite tubulure (2).

7. Ensemble selon l'une des revendications 1 à 6,
**caractérisé par le fait**
**que** l'élément de fixation (5) est orienté à peu près perpendiculairement à une face extrême (23) de la tubulure (2), sous l'action du système de positionnement (12).

8. Ensemble selon la revendication 7,
**caractérisé par le fait**
**que** la face extrême (23) se présente, dans la direction transversale de la tubulure (2), comme une surface de coupe ouverte qui forme un angle (a) pouvant être préétabli par rapport à l'axe longitudinal (24) de ladite tubulure (2).

9. Ensemble selon l'une des revendications 1 à 8,
**caractérisé par le fait**
**qu'**un élément (25) d'assemblage par complémentarité de formes, pénétrant dans une creusure (26) pratiquée dans l'élément extérieur (3), est disposé au niveau d'au moins une paroi (10, 11) de la tubulure (2).

10. Ensemble selon l'une des revendications 1 à 9,
**caractérisé par le fait**
**que** la tubulure (2) est constituée d'un matériau ferreux ou non ferreux et présente une configuration de section transversale carrée, rectangulaire, circulaire, ovale ou de forme pouvant être librement sélectionnée, dotée d'au moins deux parois (10, 11) qui s'étendent parallèlement en vue du façonnage des évidements (13, 14).

11. Ensemble selon l'une des revendications 1 à 10,
**caractérisé par**
la présence de plusieurs éléments de fixation (5) qui revêtent la forme de vis cylindriques à tête hexagonale et à écrous autobloquants (27), et par l'intermédiaire desquels la tubulure (2) et l'élément extérieur (3) sont tirés l'un contre l'autre, et sont reliés amoviblement l'un à l'autre par complémentarité de formes.

12. Ensemble selon l'une des revendications 1 à 11,
**caractérisé par**
la présence de plusieurs éléments de fixation (5) qui revêtent la forme de vis cylindriques et par l'intermédiaire desquels la tubulure (2) et l'élément extérieur (3) sont tirés l'un contre l'autre, à l'aide des perçages taraudés ménagés dans l'élément adaptateur, et sont reliés amoviblement l'un à l'autre par complémentarité de formes.
